# DEMANDE DE BREVET EUROPEEN

(11) **EP 0 938 920 A1**
(43) Date de publication de la demande: **01.09.1999**
(21) Numéro de dépôt: 99400352.3
(22) Date de dépôt: 15.02.1999
(51) Int. Cl.: B01D 53/04, B01J 8/00, B01J 8/04, F25J 3/08

(54) **Procédé et dispositif de purification de gaz par adsorption a lits horizontaux fixes**

(30) Priorité: 26.02.1998 FR 9802328
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Millet, Cyrille, 75014 Paris (FR); Bourgeois, Philippe, 75017 Paris (FR); Kraus, Georges, 75006 Paris (FR); Gabillard, Jean-Pierre, 78610 Auffargis (FR)
(74) Mandataire: Le Moenner, Gabriel

(57) **Abrégé**

Procédé de purification d'un flux gazeux contenant au moins une impuretés choisie parmi le dioxyde de carbone, la vapeur d'eau et les hydrocarbures, dans lequel on adsorbe au moins l'une desdites impuretés sur au moins un premier lit d'adsorbant comprenant au moins un premier matériau adsorbant,
caractérisé en ce qu'au moins un lit de ballast comprenant au moins un matériau-ballast ayant une densité supérieure à la densité dudit premier matériau adsorbant est situé en aval dudit au moins premier lit d'adsorbant, ledit au moins un lit de ballast exerçant une pression mécanique sur au moins une partie d'au moins ledit premier lit d'adsorbant.

## Description

Le but de la présente invention est de proposer un procédé de prétraitement ou purification de flux gazeux, en particulier d'air atmosphérique, avant séparation cryogénique dudit air par distillation cryogénique.

Il est connu que l'air atmosphérique contient des composés devant être éliminé avant l'introduction dudit air dans les échangeurs thermiques de la boîte froide d'une unité de séparation d'air, notamment les composés dioxyde de carbone (CO₂), vapeur d'eau (H₂O) et/ou hydrocarbures.

En effet, en l'absence d'un tel prétraitement de l'air pour en éliminer ses impuretés CO₂ et eau, on assiste à une condensation et à une solidification en glace de ces impuretés lors du refroidissement de l'air à température cryogénique, d'où il peut résulter des problèmes de colmatage de l'équipement, notamment les échangeurs thermiques, des colonnes de distillation...

En outre, il est également d'usage d'éliminer les impuretés hydrocarbures susceptibles d'être présentes dans l'air afin d'éviter leur trop forte concentration dans le bas de la ou des colonnes de distillation, et de pallier ainsi tout risque d'explosion.

Actuellement, ce prétraitement de l'air est effectué, selon le cas, par procédé TSA (Temperature Swing Adsorption) ou par procédé PSA (Pressure Swing Adsorption); par procédé PSA, on entend les procédés PSA proprement-dits, les procédés VSA (Vacuum Swing Adsorption), les procédés VPSA et analogues.

Classiquement, un cycle de procédé TSA de purification d'air comporte les étapes suivantes:
a) purification de l'air par adsorption des impuretés à pression super-atmosphérique et à température ambiante,
b) dépressurisation de l'adsorbeur jusqu'à la pression atmosphérique ou en-dessous de la pression atmosphérique,
c) régénération de l'adsorbant à pression atmosphérique, notamment par les gaz résiduaires ou gaz déchets, typiquement de l'azote impur provenant d'une unité de séparation d'air et réchauffé jusqu'à une température habituellement entre 100 et 200°C au moyen d'un ou plusieurs échangeurs thermiques,
d) refroidissement à température ambiante ou sub-ambiante de l'adsorbant, notamment en continuant à y introduire ledit gaz résiduaire issu de l'unité de séparation d'air, mais non réchauffé,
e) repressurisation de l'adsorbeur avec de l'air purifié issu, par exemple, d'un autre adsorbeur se trouvant en phase de production.

Habituellement, un cycle de procédé PSA de purification d'air comporte, quant à lui, sensiblement les mêmes étapes a), b) et e), mais se distingue d'un procédé TSA par une absence de réchauffement du ou des gaz résiduaires lors de l'étape de régénération (étape c)), donc l'absence de l'étape d) et, en général, un temps de cycle plus court qu'en procédé TSA.

Généralement, les dispositifs de prétraitement d'air comprennent deux adsorbeurs, fonctionnant de manière alternée, c'est-à-dire que l'un des adsorbeurs est en phase de production, pendant que l'autre est en phase de régénération.

De tels procédés TSA de purification d'air sont notamment décrit dans les documents US-A-3738084 et FR-A-7725845.

En général, l'élimination du CO₂ et de la vapeur d'eau est effectuée sur un ou plusieurs lits d'adsorbants, de préférence plusieurs lits d'adsorbants, à savoir généralement un premier adsorbant destiné à arrêter préférentiellement l'eau, par exemple un lit d'alumine activée, de gel de silice ou de zéolites, et un deuxième lit d'adsorbant pour arrêter préférentiellement le CO₂, par exemple une zéolite. On peut citer notamment les documents US-A-5531808, US-A-5587003 et US-A-4233038.

Obtenir une élimination efficace du CO₂ et de la vapeur d'eau contenus dans l'air sur un même et unique lit d'adsorbant n'est pas chose aisée, car l'eau présente une affinité pour les adsorbants nettement supérieure à celle du CO₂. En d'autres termes, la sélectivité des adsorbants est plus favorable à l'eau qu'au CO₂.

En outre, pour pouvoir régénérer un adsorbant saturé en eau, il est usuel de porter cet adsorbant à une température de régénération supérieure à 100°C.

Cependant, très peu d'adsorbants mis en oeuvre actuellement à l'échelle industrielle dans des unités TSA possèdent une structure physico-chimique susceptible de résister longtemps à un tel traitement hydrothermique; les matériaux de type alumine en font partie.

On peut citer le document US-A-5232474 qui décrit l'utilisation d'une alumine activée pour sécher et décarbonater l'air par un procédé PSA.

Habituellement, ce ou ces lits d'adsorbants sont insérés dans un ou des adsorbeurs, encore appelés "bouteilles".

Il existe aujourd'hui plusieurs géométries différentes pour ces adsorbeurs.

Dans les adsorbeurs classiques, les lits d'adsorbants sont placés horizontalement les uns au dessus des autres, c'est-à-dire qu'ils sont superposés, en étant séparés ou non par une zone de séparation ou espace "vide" ou exempt de matériel adsorbant. Cet agencement en lit superposé est simple et peu onéreux.

Par contre, les deux extrémités de ces adsorbeurs, c'est-à-dire leur fond et leur couvercle, ont un diamètre limité par les limites technologiques de forge et d'encombrement pour leur transport.

En outre, ce type d'agencement ne permet pas de traiter des débits importants de gaz, par exemple des débits d'au moins 100 000 Nm³.h⁻¹, car la vitesse du gaz devient alors trop élevée, ce qui engendre des pertes de charge importantes et une fluidisation intolérable et néfaste du ou des lits d'adsorbant.

Afin de lutter contre ces problèmes, de nouveaux adsorbeurs ont été développés, lesquels sont conçus pour traiter des débits de gaz élevés, à savoir des adsorbeurs à lits concentriques, les adsorbeurs dits "couchés" ou les adsorbeurs dits "superposés". Ces types d'adsorbeurs sont notamment décrits dans les documents EP-A-0714689, US-A-5447558, DE-A-3919750, FR-A-2541588 et US-A-4627856.

Cependant, compte tenu de leur technologie plus complexe, ces adsorbeurs nécessitent des investissements plus lourds, ce qui n'est pas toujours acceptable du point de vue industriel.

Afin de tenter de diminuer les coûts des procédés de purification, des recherches visant à améliorer les propriétés des adsorbants utilisés, en particulier leur capacité d'adsorption, ont été effectuées.

A ce titre, on peut citer les documents US-A-3885927, US-A-4493715, EP-A-0766991, US-A-5587003, EP-A-0733393, US-A-5531808 et EP-A-0718024, qui proposent différents types d'adsorbants présentant des capacités d'adsorption améliorées pour le CO₂, ce qui permet d'augmenter le débit spécifique d'air traité pour une quantité donnée d'adsorbant et donc de diminuer, d'une part, les quantités d'adsorbants utilisées et, d'autre part, les coûts globaux du procédé.

Toutefois, le problème de fluidisation du ou des lits d'adsorbants contenus dans un adsorbeur à lits superposés n'a que partiellement été résolu jusqu'à présent.

En effet, ce problème de fluidisation peut être diminué en augmentant la granulométrie des particules d'adsorbant.

Toutefois, cette solution ne peut être considérée comme pleinement satisfaisante car elle s'oppose à la tendance actuelle qui est de diminuer le temps des cycles d'épuration afin de limiter la quantité d'adsorbant à utiliser.

En outre, les adsorbants doivent travailler de plus en plus en dynamique, c'est-à-dire dans la zone de front. Or, une granulométrie plus élevée des particules d'adsorbant dégrade cette dynamique d'adsorption, ce qui n'est pas acceptable.

Par ailleurs, la technique du flux inverse (reverse-flow) ne peut pas être non plus considérée comme satisfaisante, dans la mesure où les condensats d'huile issus de la compression des gaz et l'eau ne sont pas évacués et donc le lit d'adsorbant se trouve rapidement dégradé.

Le but de la présente invention est donc de proposer un procédé de purification mettant en oeuvre un ou plusieurs adsorbants capables d'arrêter l'eau, le dioxyde de carbone et/ou les hydrocarbures susceptibles de se trouver dans l'air atmosphérique, de manière à récupérer de l'air purifié, sensiblement exempt de ces impuretés, lequel air pourra subséquemment être envoyé vers une unité de séparation d'air, telle une unité cryogénique ne présentant pas les inconvénients des procédés connus.

Pour se faire, la présente invention se propose de repousser la vitesse limite de fluidisation du ou des lits d'adsorbants contenus dans un adsorbeur sans nécessairement faire varier la granulométrie et/ou la capacité d'adsorption du ou des adsorbants mis en oeuvre.

Les inventeurs de la présente invention ont mis en évidence que ceci peut être réalisé en appliquant une pression isostatique, c'est-à-dire une pression mécanique, sur le ou les lits d'adsorbants. Cette pression isostatique doit néanmoins pouvoir suivre les mouvements, tels le tassement, du ou des lits d'adsorbants, permettre un libre passage du flux gazeux à purifier et doit s'appliquer sur préférentiellement toute la surface du lit d'adsorbant.

La présente invention concerne alors un procédé de purification d'un flux gazeux contenant au moins une impuretés choisie parmi le dioxyde de carbone, la vapeur d'eau et les hydrocarbures, dans lequel on adsorbe au moins l'une desdites impuretés sur au moins un premier lit d'adsorbant comprenant au moins un premier matériau adsorbant,
caractérisé en ce qu'au moins un lit de ballast comprenant au moins un matériau-ballast ayant une densité supérieure à la densité dudit premier matériau adsorbant est situé en aval dudit au moins premier lit d'adsorbant, ledit au moins un lit de ballast exerçant une pression mécanique sur au moins une partie d'au moins ledit premier lit d'adsorbant.

En d'autres termes, le lit de ballast est placé sur ledit premier lit d'adsorbant, c'est-à-dire au-dessus dudit premier lit d'adsorbant, de manière à exercer une pression mécanique sur celui-ci, ladite pression étant générée par tout ou partie du poids dudit lit de ballast.

Selon le cas, le procédé de l'invention peut comprendre l'une ou plusieurs des caractéristiques suivantes:
- ledit au moins un lit de ballast et ledit au moins un premier lit d'adsorbant sont séparés par une grille flottante;
- le matériau-ballast est un matériau inerte ou adsorbant, de préférence le matériau-ballast est choisi dans le groupe formé par les alumines inertes;
- la densité du matériau-ballast est d'au moins deux fois supérieure à la densité d'au moins ledit premier matériau adsorbant, de préférence d'au moins trois fois supérieure;
- au moins un deuxième lit d'adsorbant comprenant au moins un deuxième matériau adsorbant est agencé en amont et/ou en aval dudit premier lit d'adsorbant, de préférence en amont dudit premier lit d'adsorbant;
- la masse volumique dudit deuxième matériau adsorbant est supérieure ou égale à celle dudit premier matériau adsorbant;
- la capacité calorifique dudit matériau-ballast est inférieure ou égale à la capacité calorifique dudit matériau adsorbant, de préférence inférieure à environ 0,24 Kcal.Kg⁻¹.°C⁻¹;
- la granulométrie des particules de matériau-ballast est supérieure à la granulométrie des particules dudit premier matériau adsorbant et/ou dudit deuxième matériau adsorbant;
- le deuxième matériau adsorbant est choisi parmi les alumines activées et/ou en ce que le premier matériau adsorbant est choisi parmi les zéolites, de préférence parmi les zéolites X ayant un rapport Si/Al inférieur à 1.15 échangées ou non-échangées;
- le flux gazeux à purifier est de l'air;
- l'élimination du CO₂ et de la vapeur d'eau est réalisée dans au moins un adsorbeur et, de préférence, dans au moins deux adsorbeurs fonctionnant de manière alternée;
- il est choisi dans le groupe formé par les procédés TSA et PSA;
- on opère à une pression d'adsorption de 10⁵ à 10⁷ Pa;
- il comprend au moins une étape de séparation cryogénique d'au moins une partie de l'air purifié, de préférence une étape de distillation cryogénique de l'air purifié;
- la purification du gaz, notamment de l'air, est réalisée à une température comprise entre -40°C et +80°C.

L'invention concerne, en outre, un dispositif de purification d'un flux gazeux susceptible de mettre en oeuvre le procédé selon l'invention, comprenant des moyens de compression de gaz, au moins un adsorbeur à lits horizontaux superposés, contenant au moins un premier lit d'adsorbant comprenant au moins un premier matériau adsorbant et au moins un lit de ballast comprenant au moins un matériau-ballast, ledit lit de ballast étant situé en aval et au-dessus dudit au moins premier lit d'adsorbant, ledit au moins un lit de ballast exerçant une pression mécanique sur au moins une partie d'au moins ledit premier lit d'adsorbant. De préférence, le dispositif comporte au moins deux adsorbeurs contenant chacun au moins deux lits d'adsorbants et au moins un lit de ballast, lesdits lits d'adsorbants et de ballast étant séparés par des grilles de séparation flottantes.

Toutefois, afin d'éviter que la présence du matériau-ballast ne perturbe le procédé de purification, on veille à ce que le matériau-ballast n'engendre que des pertes de charge négligeables en comparaison de celles dans le ou les lits d'adsorbants en choisissant, par exemples, un matériau-ballast de granulométrie supérieure à celle des particules d'adsorbants et/ou en un lit faible épaisseur dudit matériau-ballast.

En outre, lorsque le procédé est de type TSA, on utilise avantageusement un matériau-ballast ayant une capacité calorifique donnée, telle que le front de chaleur de régénération puisse traverser l'adsorbeur dans le temps imparti à cet effet.

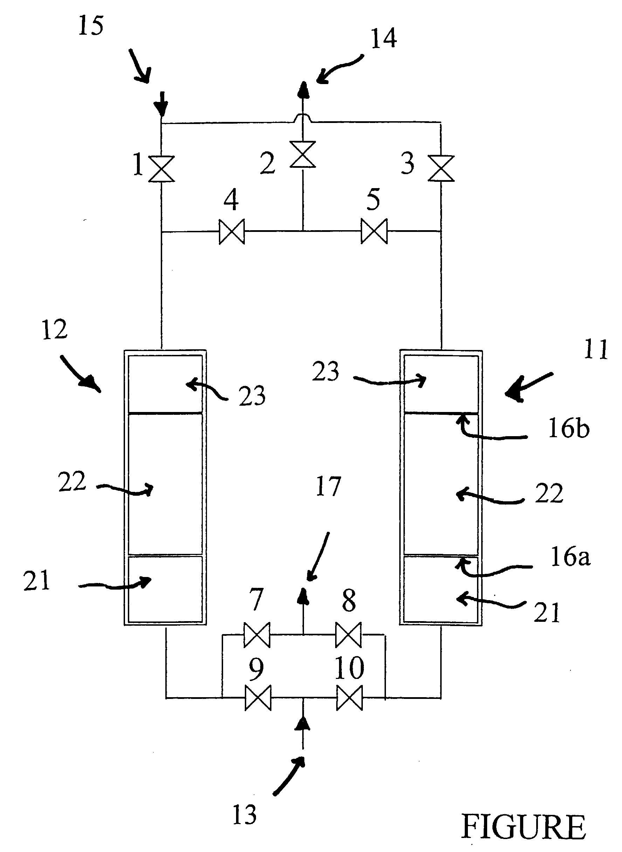

L'invention va maintenant être décrite plus en détail à l'aide d'un exemple de réalisation et de la figure unique annexée, donnés à titre illustratif mais non limitatif.

### EXEMPLE

La figure unique annexée est une représentation schématique d'une installation de purification de gaz, ici de purification d'air, susceptible de mettre en oeuvre le procédé de purification selon la présente invention.

Cette installation comprend deux adsorbeurs 11 et 12 ou bouteilles fonctionnant de manière alternée selon des cycles de production de durée déterminée.

Chacun de ces deux adsorbeurs 11 et 12 de type à lits superposés contient un lit amont 21 d'un premier adsorbant, ici des billes d'alumine activée, un lit intermédiaire d'un second adsorbant 22, ici une zéolite de type LSX, et un lit aval 23 de matériau-ballast, ici des billes d'alumine inerte, par exemple l'alumine inerte commercialisée par la société ALCOA sous la référence T162.

Les lits amont 21, intermédiaire 22 et aval 23 sont séparés, respectivement, par des grilles de séparation 16a et 16b flottantes, c'est-à-dire non fixées aux parois internes des adsorbeurs 11 et 12.

De l'air comprimé à purifier est acheminé 13 via des canalisations de gaz jusqu'en entrée des adsorbeurs 11 et 12, où il subit une purification par adsorption des impuretés CO₂, eau et/ou hydrocarbures qu'il contient sur les particules d'adsorbants des lits 21 et 22, avant d'être évacué par des canalisations de gaz vers son site d'utilisation 14, telle une colonne de distillation cryogénique, ou vers un site de stockage.

La régénération des lits d'adsorbants 22 et 23 se fait, de manière classique, par exemple au moyen d'un gaz chaud, tel un gaz résiduaire issu d'une unité de séparation d'air, acheminé par un réseau de canalisation 15; les gaz déchets étant évacués à l'atmosphère via une mise à l'air 17.

La régulation des flux gazeux, à savoir de l'air à purifier, de l'air purifié, du gaz de régénération et des gaz déchets se fait par l'intermédiaire des vannes 1 à 10, lesquelles sont pilotées par une unité de contrôle non représentée, de manière connue.

Le poids exercé par le lit aval 23 de matériau-ballast sur les lits 21 et 22 permet d'éviter ou de minimiser la fluidisation desdits lits d'adsorbants 21 et 22, en particulier du lit 22.

En effet, étant donné que le lit 22 de zéolites de type LSX a une granulométrie de 1,5 à 3 mm et que le lit 21 d'alumine activée a une granulométrie de 2 à 5 mm, le lit 21 d'alumine activée offre donc des pertes de charge plus faible pour une masse volumique comparable. Par conséquent, la vitesse limite de fluidisation dudit lit 21 d'alumine activée est supérieure à celle du lit 22 de zéolites.

Il s'ensuit que le lit 22 de zéolites est donc limitant pour le débit d'air maximal pouvant être purifié; celui-ci doit alors être maintenu prioritairement pour ralentir et/ou éviter sa fluidisation.

Lorsqu'on utilise un matériau-ballast ayant une capacité calorifique massique identique à celle de la zéolite, on dispose alors dans l'adsorbeur une masse de matériau-ballast sensiblement égale à celle de la zéolite.

En général, le dimensionnement d'un adsorbeur est tel que l'effort exercé par le gaz au travers du (ou des) lit d'adsorbant est approximativement égal au poids dudit lit d'adsorbant.

Il s'ensuit qu'avec un matériau-ballast ayant un poids égal à celui du (ou des) lit d'adsorbant, la perte de charge résultante peut être multipliée par 2.

De là, et étant donné que le régime d'écoulement du gaz au travers du lit d'adsorbant (zéolite) est turbulent, on peut augmenter la vitesse de gaz dans l'adsorbeur d'un coefficient multiplicateur égal à √ 2 et ce, sans provoquer la fluidisation du (ou des) lit d'adsorbant; l'effort exercé par le passage du gaz au travers du lit de ballast étant très faible devant celui exercé par ledit gaz au travers du (ou des) lit d'adsorbant.

Ainsi, pour un lit de matériau-ballast, telles des billes d'alumines inertes, ayant une masse volumique d'environ 2 100 kg.m⁻³ et pour un lit d'adsorbant de type zéolitique de masse volumique environ égale à 700 kg.m⁻³, l'épaisseur du lit de ballast 23 est environ le tiers de l'épaisseur du lit de zéolites 22.

En fait, en première approximation, la perte de charge spécifique d'un gaz, tel l'air, au travers d'un lit de particules granulaires est inversement proportionnelle au diamètre des particules. Donc, pour obtenir une perte de charge au travers du lit de ballast 23 d'environ 10 fois plus faible que celle au travers du lit de zéolite 22, il convient de choisir des particules de matériau-ballast d'un diamètre hydraulique égal à au moins 3 fois celui des particules de zéolite.

Le procédé de la présente invention est particulièrement avantageux lorsqu'il est mis en oeuvre dans un adsorbeur à lits horizontaux superposés, dans le but de traiter des débits de gaz d'au moins 150 000 Nm³.h⁻¹ (1 Nm³ = 1 m³ de gaz à 10⁵ Pa et 0°C).

## Revendications

1. Procédé de purification d'un flux gazeux contenant au moins une impuretés choisie parmi le dioxyde de carbone, la vapeur d'eau et les hydrocarbures, dans lequel on adsorbe au moins l'une desdites impuretés sur au moins un premier lit d'adsorbant comprenant au moins un premier matériau adsorbant,
caractérisé en ce qu'au moins un lit de ballast comprenant au moins un matériau-ballast ayant une densité supérieure à la densité dudit premier matériau adsorbant est situé en aval dudit au moins premier lit d'adsorbant, ledit au moins un lit de ballast exerçant une pression mécanique sur au moins une partie d'au moins ledit premier lit d'adsorbant.

2. Procédé selon la revendication 1, caractérisé en ce que ledit au moins un lit de ballast et ledit au moins un premier lit d'adsorbant sont séparés par une grille flottante.

3. Procédé selon l'une des revendications 1 ou 2, caractérisé en ce que le matériau-ballast est un matériau inerte ou adsorbant, de préférence le matériau-ballast est choisi dans le groupe formé par les alumines inertes.

4. Procédé selon l'une des revendications 1 à 3, caractérisé en ce que la densité du matériau-ballast est d'au moins deux fois supérieure à la densité d'au moins ledit premier matériau adsorbant, de préférence d'au moins trois fois supérieure.

5. Procédé selon l'une des revendications 1 à 4, caractérisé en ce qu'au moins un deuxième lit d'adsorbant comprenant au moins un deuxième matériau adsorbant est agencé en amont et/ou en aval dudit premier lit d'adsorbant, de préférence en amont dudit premier lit d'adsorbant.

6. Procédé selon la revendication 5, caractérisé en ce que la capacité calorifique dudit matériau-ballast est inférieure ou égale à la capacité calorifique dudit matériau adsorbant, de préférence inférieure à environ 0,24 Kcal.Kg⁻¹.°C^{-1.}

7. Procédé selon l'une des revendications 1 à 6, caractérisé en ce que la granulométrie des particules de matériau-ballast est supérieure à la granulométrie des particules dudit premier matériau adsorbant et/ou dudit deuxième matériau adsorbant.

8. Procédé selon l'une des revendications 1 à 7, caractérisé en ce que le deuxième matériau adsorbant est choisi parmi les alumines activées et/ou en ce que le premier matériau adsorbant est choisi parmi les zéolites, de préférence parmi les zéolites X ayant un rapport Si/Al inférieur à 1.15 échangées ou non-échangées.

9. Procédé selon l'une des revendications 1 à 8, caractérisé en ce que le flux gazeux à purifier est de l'air.

10. Dispositif de purification d'un flux gazeux susceptible de mettre en oeuvre le procédé selon l'une des revendications 1 à 9, comprenant des moyens de compression de gaz, au moins un adsorbeur (11, 12) à lits (21, 22, 23) horizontaux superposés, contenant au moins un premier lit d'adsorbant (21, 22) comprenant au moins un premier matériau adsorbant et au moins un lit de ballast (23) comprenant au moins un matériau-ballast, ledit lit de ballast étant situé en aval et au-dessus dudit au moins premier lit d'adsorbant (21, 22), ledit au moins un lit de ballast (23) exerçant une pression mécanique sur au moins une partie d'au moins ledit premier lit d'adsorbant (21, 22).

11. Dispositif selon la revendication 10, caractérisé en ce qu'il comporte au moins deux adsorbeurs (11, 12) contenant chacun au moins deux lits d'adsorbants (21, 22) et au moins un lit de ballast (23), lesdits lits d'adsorbants (21, 22) et de ballast (23) étant séparés par des grilles de séparation (16a, 16b) flottantes.
